# EUROPEAN PATENT APPLICATION

(11) **EP 1 736 310 A1**
(43) Date of publication of application: **27.12.2006**
(21) Application number: 06003750.4
(22) Date of filing: 18.06.2004
(51) Int. Cl.: B32B 27/32

(54) **Food packaging**

(30) Priority: 18.06.2003 GB 0314189
(62) Divisional of application: 04253682.1
(71) Applicant: Borealis AS, 3960 Stathelle (NO); Tommen Gram Holding A/S, 7042 Trondheim (NO)
(72) Inventor: Kvamme, Lars Inge, 3970 Langesund (NO); Muller, Finn Robert, 7032 Trondheim (NO)
(74) Representative: Campbell, Neil Boyd

(57) **Abstract**

The use of a polyolefin film comprising a polypropylene polymer and a polyethylene polymer for the packaging of fresh produce.

## Description

This invention relates to a new polyolefin film for packaging food, in particular to a single or multilayer film comprising polyethylene and polypropylene components, especially a multilayer film comprising polyethylene and polypropylene layers capable of packaging fresh foods such as vegetables, fruit, meat and seafood.

The packaging of fresh food products, especially seafood and in particular fish, is a special challenge for the food packager. Many fresh foods are moist (or can become wet under pressure) and may also contain other natural liquids such as oils and sugary fluids. Fresh animal products will also contain blood and fats and fish will usually be wet and hence covered with sea or freshwater, blood, fish oils, ice etc. The presence of all these liquid contaminants makes fresh produce more problematic to package than dry food materials such as pasta or rice. The packaging process and materials for use therein must therefore be designed to ensure not only that the food retains its quality but also that none of the substances mentioned above can leak from the packaging or prevent successful packaging, e.g. prevent sealing being achieved. It is also essential that the polymer is not degraded or dissolved at all by the liquids present in the product being packaged (i.e. there is no migration from the polymer film to the fresh produce).

Moreover, most fresh produce needs to be carefully handled and packaged to maintain the integrity of the product since products such as fruit and fish tend to damage easily. Much care is therefore needed when packaging fresh produce.

It must also be remembered that whilst significant quantities of fresh produce is eaten essentially immediately (i.e within a few days), much is frozen and hence any packaging material employed in transport and storage must be suitable for both home and industrial freezing, e.g. down to temperatures as low as -40°C. Moreover, many food consumers now require foods to be packaged in ways which simplify any cooking process, e.g. boil in the bag products or microwaveable products. Ideally therefore, packaging material for fresh produce should be capable of being boiled or microwaved.

A variety of different packaging alternatives are currently used for the packaging of fresh produce. For example, fish to be frozen is packaged in plastic or corrugated board containers, e.g. expanded polystyrene containers, or on a coated cardboard or plastic support. The support or container is most often supplied with a thin polyolefin film liner and the entire assembly then frozen rapidly to -40°C.

Much fresh meat is packaged in non-sealed polystyrene containers covered only by a polyolefin cling film, i.e. one that adheres to the container.

Lettuce is often packaged in non-sealed plastic wrappers thus limiting its shelf life.

There remains a need therefore to design improved packaging for fresh produce, e.g. fish, in particular to try to eliminate the need for cardboard or plastic containers or supports. Such items are voluminous, expensive to manufacture and are often environmentally unfriendly and packaging operations using such containers are complicated and relatively costly.

An alternative to the containers or supports mentioned above is a film comprising a polyethylene layer and a polyester (PET), ethylene vinyl alcohol (EVOH) or polyamide (PA) layer. Such films can be made by lamination and exhibit good thermal resistance and also act as barrier films. Barrier films prevent the diffusion of liquids or gases (such as water vapour, oxygen or carbon dioxide) from or into the product. Water vapour has low permeability through both polyethylene while gasses such as oxygen, carbon dioxide and nitrogen penetrate polyethylene readily. PET, EVOH and PA films have low permeability to these gasses but both polyamide and EVOH are hygroscopic. It is typical therefore that films used for packaging of fresh food products will be packed in a multilayer film comprising PE + PA or EVOH in order to minimise ingress of gasses, in particular oxygen. Meat and vegetables such as potatoes and salads are packed in these films today.

However, terephthlate, EVOH and polyamide polymers are expensive which is a serious drawback.

The inventors have surprisingly found a particular polyolefin film suitable for the packaging of fresh produce, e.g. fruit, vegetables, dairy products, seafood and meat which is capable of replacing entirely currently employed packaging materials. Hence, the film is capable of replacing either film lined containers or PA/PET/EVOH films giving rise to a flexible sealed pack which is easy to transport and store. Moreover, the film of the invention is suitable for freezing, microwaving and boiling.

The film of the invention is preferably a multilayer film comprising polyethylene and polypropylene layers. US 4460631 describes a sealable biaxially stretched film having high scratch resistance formed from, for example, an isotactic polypropylene and a polyethylene homo or copolymer with propylene. Such a film is useful for packaging dry foodstuffs such as pasta and rice. Never before, however, have the films of the invention been proposed for use in the packaging of fresh produce, in particular produce which contains moisture or other contaminating liquids, e.g. products such as vegetables, meat or seafood.

Hence, viewed from one aspect the invention provides the use of a polyolefin film, e.g. a multilayer film, comprising a polypropylene polymer and a polyethylene polymer, for the packaging of fresh produce, e.g. meat or seafood.

Preferably, the invention provides the use of a polyolefin multilayer film, e.g. bilayer or trilayer film, having at least a first layer and a sealing layer, said first layer comprising a polypropylene polymer, preferably a copolymer with a C₂₋₁₀-alpha olefin and said sealing layer comprising a polyethylene polymer, for the packaging of fresh produce, e.g. meat or seafood.

The term "fresh produce" is intended to cover essentially solid fresh foods that have relatively high levels of liquid content, e.g. water content, blood content or oil/fat content and are wet to the touch or will yield liquid under small amounts of pressure or when cut or pierced. Thus, the term "fresh produce" covers fruit and vegetables as well as meat, seafood and certain dairy products, e.g. cheese.

Fruit and vegetables may be moist to the touch, e.g. raspberries, or yield moisture when squashed. Cheese may yield oils and fats when pressurised. Meat and seafood are inherently wet to the touch due to blood, fat and water content.

Preferred vegetables for packaging with the films of the invention are potatoes, lettuce (including green salads in general), carrots, swede etc. In a particularly preferred embodiment, the vegetable is one which is boiled prior to eating and the packaging forms a boil-in-bag product. If necessary, the vegetable may be peeled prior to packaging and precooked.

The term "meat" used herein refers to chicken, duck, pork, beef, rabbit, lamb/mutton, venison etc and other edible animals. The term "seafood" as used herein covers all edible marine produce such as fish, shellfish (prawns, crayfish, shrimp etc), crab, lobster, squid, scallops etc.

It is preferred if the films of the invention are used to package seafood. Most preferably however, the invention concerns the packaging of sea or freshwater fish such as cod, haddock, whiting, salmon, trout, plaice, turbot, bass, tuna, swordfish, mackerel, hake, eel, snapper, skate, herring, catfish, dogfish, marlin, etc. The films may also be used to package fish cakes or other prepared seafood products.

The term "fresh produce" is not intended to cover foods which are dry to the touch or have, in general low moisture contents, such as pasta, rice and bread. Such foods will not emit liquids under small amounts of pressure, e.g. those which the product may be exposed to in a shopping basket or during a conventional packaging operation.

The fresh produce should preferably be regarded as solid, i.e. the films of the invention are not intended for use with liquid produce such as cream. Moreover, the fresh produce should preferably not melt readily, i.e. the films are not intended for the packaging of butter or chocolate.

In its broadest embodiment the film of the invention may comprise a single layer film formed from a simple blend of polyethylene and polypropylene polymers. The preferred nature of such polymers is discussed in more detail below albeit in connection with multilayer films which form the preferred aspect of the invention. Thus, preferred polyethylene and polypropylene polymers for use in a single layer film are those preferred for use in each layer of the multilayer film, e.g. a polypropylene copolymer as described below or an LLDPE (linear low density polyethylene) etc.

In the more preferred embodiment of the invention a multilayer film is used to pack the fresh produce which may comprise at least a first layer and a sealing layer.

The sealing layer must be present on an outer surface of the multilayer film so that it can be subjected to heat to form a seal around the product being packaged. The films of the invention exhibit particularly beneficial sealing properties since any aqueous contaminants present where the seal is being formed can be evaporated as the sealing process is carried out. When a product such as a fish is transferred onto the film prior to sealing it is inevitable that the sealing area will become contaminated with water, blood, oils etc from the fish which could detrimentally affect the sealing procedure. Since the films of the invention can be sealed at relatively high temperatures, e.g. greater than 130°C, water and the like is evaporated during the sealing process giving rise to a much more effective seal. The ability to seal at these temperatures whilst maintaining film integrity in a 100% polyolefin film such as those of the invention is new and forms an important aspect of the invention. The combination of a polyethylene polymer and polypropylene polymer in a single or multilayer film provides these benefits.

The sealing layer comprises a polyethylene polymer. By polyethylene polymer is meant a polymer in which at least 70%, preferably at least 80%, especially at least 90% by weight of the polymer is made up from ethylene monomer units. In one embodiment, the polyethylene polymer may be a homopolymer, i.e. where substantially all, e.g. at least 99.5% wt of the monomer units are derived from ethylene e.g. a low density polyethylene (LDPE). Suitable LDPE's have the following properties:

| | |
|---|---|
| Density: 910-930 kg/m³ | (ISO 1183) |
| MFR₂ : 0.1 to 10 g/10min | (ISO 1133) |
| Melting Temperature: 100 to 130°C | (ISO 11357/03) |

However in a preferred embodiment, the sealing layer comprises a polyethylene copolymer or terpolymer with a C₃₋₁₀-alpha-olefin. Suitable comonomers are propylene, 1-butene, 1-pentene, 1-hexene and 1-octene of which butene, hexene and octene are preferred. Moreover, it is preferred if the copolymer is an LLDPE. Suitable LLDPE's can be produced using Ziegler-Natta or metallocene catalysis with MWD (Mw/Mn) between 2-20 and MFR₂ of 0.1 to 10 g/10 min. LLDPE polymers which have a bimodal molecular weight distribution are ideally suited when packaging operations involve deep drawing and low temperatures.

The amount of comonomer present in the polyethylene copolymer may vary from 0.1% to 15% by weight, preferably 5% to 10% by weight.

LLDPE's of use in the sealing layer are preferably manufactured employing normal Ziegler-Natta catalysts or single site catalysts as is known in the art and have the following properties:

| | |
|---|---|
| Density: 910-930 kg/m³ | (ISO 1183) |
| MFR₂: 0.1 to 10 g/10min | (ISO 1133) |
| Melting Temperature: 100 to 130°C | (ISO 11357/03) |

Various commercially available polymers may be used as the LDPE or LLDPE in the sealing layer of the invention. Potential polymers include Borstar FB2230, FB2310, FA5224, FG5190 (Borealis), ELITE 5400G (Dow) and Dowlex 2045E (Dow).

In a more preferred embodiment, the sealing layer may be a mixture of polyethylene polymers, e.g. a mixture of two polymers or three polymers. For example, the sealing layer could be formed from a mixture of LDPE's, LLDPE's or from the combination of an LLDPE and an LDPE.

A particularly suitable sealing layer is formed from a mixture of LLDPE polymers as described previously above, e.g. Borstar FB2230 and Elite 5400G. It is preferred if one LLDPE is a single site catalyst produced LLDPE (mLLDPE) due to its high seal strength and hot tack properties. A second LLDPE may be a Ziegler Natta LLDPE which may help to minimise the cost of the film. Preferred mLLDPE's have 1-hexene or 1-octene as a comonomer whereas preferred Ziegler-Natta LLDPE's employ butene or hexene as a comonomer.

Where two LLDPE or LDPE polymers are employed in the sealing layer each may form up to 99 wt% of the sealing layer. Preferably however each LLDPE should form up to 80wt% of the sealing layer. Wherever possible however, the skilled man will maximise the presence of the Ziegler-Natta LLPDE to minimise costs and this should preferably form the bulk of the sealing layer. The ratio of Ziegler LLDPE to mLLDPE may therefore be from 2:1 to 5:1, e.g. the Ziegler-Natta LLDPE will form at least 75 wt% of the sealing layer.

An alternative and still yet further preferred embodiment involves a two or three polymer sealing layer comprising one or two polyethylene polymers and a polyethylene copolymer with a polar comonomer (from hereon a polar copolymer) such as an acetate or an acrylate. Preferred are acrylate comonomers of which butyl acrylate and especially methyl acrylate are especially favoured.

It is believed the polar copolymer aids adhesion between the various layers of the multilayer film. The polar copolymer should preferably comprise between 1% to 40% by weight comonomer, e.g. 5 to 35%, more preferably 10 to 25% by weight.

Where a mixture of polyethylene polymer and polar copolymer is employed as the sealing layer, the polar copolymer should form between 5 to 25% by weight of the sealing layer, preferably 10 to 20% by weight. The LLDPE polymer or polymers should therefore form 75 to 95% by weight of the sealing layer in this embodiment, e.g. 80 to 90%. The sealing layer may consist essentially of LLDPE and the polar copolymer (i.e. only additionally includes standard additives/preservatives etc).

The first layer should comprise a polypropylene polymer, preferably a polypropylene copolymer with a C₂₋₁₀-alpha-olefin comonomer such as ethylene, butene or hexene, especially ethylene. By polypropylene polymer is meant a polymer in which at least 70%, preferably at least 80% by weight of the polymer comprises propylene monomer units. In one embodiment the polypropylene polymer may be a homopolymer, i.e. where substantially all, e.g. at least 99.5% wt of the monomer units are derived from propylene however copolymers of propylene are preferred due to their superior toughness at low temperatures.

The amount of comonomer present may vary, however suitable ranges are from 1% to 30%, preferably 5 to 10% by weight.

Preferred polypropylene polymers for use in the first layer are heterophasic block copolymers or random copolymers. Heterophasic block copolymers will give the best low temperature toughness and hence be best suited for frozen packs. Random copolymers give the film improved transparency. Suitable polymers have the properties below and can be made using Ziegler-Natta or single site catalysis often in a two stage polymerisation using conventional techniques:

| | |
|---|---|
| Density: 890-920 kg/m³ | (ISO 1183) |
| MFR₂:0.05 to 2 g/10min | (ISO 1133) |
| Melting Temperature: 140 to 180°C | (ISO 3146) |

Commercially available copolymers include BHC5012 (Borealis), BA110CF, RB707CF and RB501BF (Borealis).

The first layer may also comprise a mixture of polymers as long as one is a polypropylene polymer. Preferred additional polymers include LDPE or LLDPE polymers such as those described above in connection with the sealing layer. Preferred in this regard are mLLDPE's.

Where such a mixture is present, it is preferred if the polypropylene copolymer forms 75 to 95% by weight of the first layer. The LLDPE or LDPE polymer may form between 5 to 25%, e.g. 8 to 18 % by weight of the first layer.

Whilst the polymer film used for the packing of fresh produce in this invention should comprise a sealing layer and a first layer (i.e. at least a bilayer film), the film may also comprise further layers. For example, a preferred film comprises three layers, a sealing layer, first layer and further sealing layer, e.g. arranged such that the sealing layers sandwich the first layer. A second sealing layer may be different from or identical to the first sealing layer and have a structure as described above in connection with the main sealing layer. Conveniently however, both sealing layers will be identical. A three layer film in which the first layer is sandwiched between two sealing layers is believed to curl less than a two layer film having only a first and sealing layer.

At least one sealing layer must always be outmost to allow sealing to be effected.

The combination of the sealing layer and first layer of the invention gives rise to a film which exhibits high temperature heat resistance and hence integrity during heat sealing as well as an advantageous sealing temperature, i.e. sufficient to allow evaporation of water etc from the sealing areas of the film and an advantageous heat sealing range. Hence, due to the integrity of the film at higher temperatures, it is possible to heat seal the film safely at higher temperature.

The films of the invention should preferably have a heat sealing range of at least 25°C, especially at least 30°C, most preferably at least 40°C (measured as described in the examples).

Moreover, the films of the invention are preferably heat sealable at temperatures greater than 180°C.

The films also exhibit high mechanical strength particularly at low temperature (e.g. -40°C). Thus, the films of the invention exhibit very high protrusion puncture probe test results (ASTM D5748) in particular over a broad temperature range. Thus for a 130 *µ*m film, maximum force is preferably greater than 170N, more preferably greater than 200N.

The films of the invention can be manufactured using conventional coextrusion and film blowing technology or via lamination. Hence the various layers can be coextruded through a suitable die as is known in the art. Alternatively, the layers could be laminated, e.g. using a polyurethane adhesive however, this is not preferred since coextrusion is a simpler technique.

The polymers used in the multilayers films may be bought commercially from polymer suppliers or manufactured using conventional polymerisation techniques. Thus, polymers manufactured using single site catalysts employ procedures well known in the art. Published patent applications by Exxon, Hoechst, Phillips, Dow, Chisso, Mitsui, Fina, BASF, Mitsubishi, Mobil, BASF, Montell, DSM and Borealis, e.g. WO96/23010, WO98/49208, WO99/12981, WO99/19335, WO97/28170, EP-A-423101, EP-A-537130 all have descriptions of the use of these catalysts.

Alternatively, the polymers may be made using Ziegler-Natta catalysts e.g. in Borealis' Borstar® polymerisation technology or known high pressure radical polymerisation technologies.

The multilayer film should be approximately 50 to 500 microns in thickness, e.g. 80 to 250 microns. Typically, the polypropylene layer is approximately twice as thick as the sealing layer(s).

The films of the invention are particularly applicable for packaging lines where the product is frozen immediately after packaging. The invention is thus of most importance for packaging meat and fish which is frozen for both industrial and consumer consumption.

The actual packaging process may be a form, fill and seal (FFS) process, deep draw process or tray lidding process. FFS and deep draw processes are preferred, especially deep draw.

FFS involves packaging machines that use heat sealable flexible plastic packaging film to form a package, which is then filled, heat-sealed and cut off. There are two basic types, horizontal and vertical. A horizontal machine forms a package, fills with product and seals, and all in a sequence of operations while the film is being transported in a horizontal direction. They are widely used for packaging solid foodstuffs. A vertical machine forms a tube, fills and seals, all in a sequence of operations while the film is being transported vertically downwards. They are widely used for packaging foodstuffs in a liquid, powder, paste or granule state.

Thus viewed from one aspect the invention provides a process for packaging fresh produce comprising forming an open package using a film comprising a polypropylene polymer and a polyethylene polymer as hereinbefore defined, filling said package with said fresh produce, and heat-sealing the package.

In a deep draw process the film of the invention is deep drawn into a suitable container in which the fresh produce is placed. Sealing of the container may be effected by using further film of the invention and sealing as necessary. It is most surprising that the films of the invention are suitable for use in a deep draw process.

Thus, viewed from a further aspect, the invention provides a process for packaging fresh produce comprising:
(I) Deep drawing a polyolefin film comprising a polypropylene polymer and a polyethylene polymer as hereinbefore described to form a container;
(II) placing said fresh produce in said container; and
(III)heat sealing the container with a second polyolefin film comprising a polypropylene polymer and a polyethylene polymer as hereinbefore defined.

In a tray lidding process, a preformed tray, made from conventional material, may be sealed using the film of the invention.

Surprisingly, in the FFS process, it is envisaged that a sealing layer formed entirely from mLLDPE can be employed.

Certain films of use in the packaging of fresh produce according to the invention are themselves new and form a further aspect of the invention. Hence, viewed from a further aspect the invention provides a multilayer film having a first layer and a sealing layer, said first layer comprising a heterophasic polypropylene copolymer with a C₂₋₁₀-alpha olefin comonomer and said sealing layer comprising an LLDPE and an ethylene acrylate copolymer, e.g. EMA polymer.

Viewed from a still further aspect the invention provides a process for the manufacture of a multilayer film as hereinbefore described comprising coextruding a first layer and a sealing layer, said first layer comprising a heterophasic polypropylene copolymer with a C₂₋₁₀-alpha olefin comonomer and said sealing layer comprising an LLDPE and an ethylene acrylate copolymer and blowing the extrudate into a film.

The raw materials used to make the films may also contain standard additives such as antioxidants, antiblocking agents, antic static agents, slip agents, pigments, dyes etc. A number of the commercially available polymer grades of use in this invention already comprise one or more of these additives.

The invention will now be described with reference to the following non-limiting examples.

### Experimental:

The films were prepared using the following equipment:
Extruder: Windmöller & Hölscher, coextrusion blown film line with IBC,(internal bubble cooling).
3-layer, A/B/C, barrier screw
Typical thickness distribution: 25% / 50% / 25%
Die gap 1,2mm
Die Ø 200mm
Blow up ratio film 3:1
Temperature settings on the extruders 180°C - 240°C

### General Packaging Protocol

Films 1 to 4 described in the examples below were tested on a commercially available packaging machine, Repak RE 3 model from year 2000/2001. A first film with 220 *µ*m thickness was heated and deep drawn to form a tray, filled with fresh herring and a second film with 120 *µ*m thickness was sealed on top making a lid.

### Comparative Example 1

A coextruded film with three layers was prepared using the materials below:
**Sealing layer**: 100% PE-LLDPE - Borstar FB2230
**First layer**: 100% PE-LLDPE - Borstar FB2230
**Outside layer**: 100% PE-LLDPE - Borstar FB2230

At normal sealing temperature settings for PE (145 to 155°C) the seal delaminated due to the presence of contaminants. When increasing the sealing temperature to 160°C, holes appeared beside the seals leading to package failures.

### Comparative Example 2

A coextruded film with three layers was prepared using the materials below:
**Sealing layer:** 100% PE-LLDPE - Borstar FB2230
**First layer:** 100% PE-HDPE - Borstar FB1460
**Outside layer:** 100% PE-LLDPE - Borstar FB2230

At normal sealing temperature settings for PE (145 to 155°C) the seal delaminated due to the presence of contaminants. When increasing the sealing temperature to 160°C holes appeared beside the seals leading to package failures. This despite the fact that HDPE with higher melting point was used in the first layer providing better heat resistance.

### Example 3

A coextruded film with three layers was prepared using the materials below:
- **Sealing layer:**: PE-LLDPE - Borstar FB2230 (70%) + PE LLDPE-mLLDPE - Dow Elite 5400 (15%) + PE Copolymer with methyl acrylate - DuPont Elvaloy 1224AC (15%)
- **First Layer:**: PP heterophasic Copolymer - Borealis BHC 5012 (85%) + PE LLDPE-mLLDPE - Dow Elite 5400 (15%)
- **Second sealing:**: PE-LLDPE - Borstar FB2230 (70%) +
- **Layer**: PE LLDPE-mLLDPE - Dow Elite 5400 (15%) + PE Copolymer with methyl acrylate - DuPont Elvaloy 1224AC (15%)

At normal sealing temperature settings for PE (145 to 155°C) the seal delaminated due to the presence of contaminants. When the sealing temperature was increased to 160 to 165°C a perfect/strong seal could be achieved with no delamination or holes appearing beside the seals.

### Example 4

A coextruded film with two layers was prepared using the materials below:
- **Sealing layer:**: PE-LLDPE - Borstar FB2230 (70%) + PE LLDPE-mLLDPE - Dow Elite 5400 (15%) + PE Copolymer with methyl acrylate - DuPont Elvaloy 1224AC (15%)
- **First Layer:**: PP heterophasic Copolymer - Borealis BHC 5012 (85%) + PE LLDPE-mLLDPE - Dow Elite 5400 (15%)

At normal sealing temperature settings for PE (145 to 155°C) the seal delaminated due to the presence of contaminants. When the sealing temperature was increased to 160 to 165°C, a perfect/strong seal could be achieved with no delamination or holes appearing beside the seals.

### Example 5

The mechanical performance of films has been analysed at +23°C and -40°C by the Protrusion Puncture Probe Test according to ASTM D5748 in order to demonstrate the superior mechanical performance of films of this invention over a broad temperature range and their suitability for packaging of goods to be frozen. The films of example 1 and 3 were compared with the following film and that of Example 6. All films had a total film thickness of 130 *µ*m. The results are presented in Table 1.

Film of Example 5
**Sealing layer:** 100% PE-LLDPE - Borstar FB2310
**First layer:** 100% PE-LLDPE - Borstar FB2310
**Outside layer:** 100% PE-LLDPE - Borstar FB2310

### Example 6

Nordform 213 from Nordpak OY, Finland, a commercially available multilayer laminate consisting of several layers of polyethylene and polyamide with adjacent layers of adhesive polymer commonly used for food packaging.

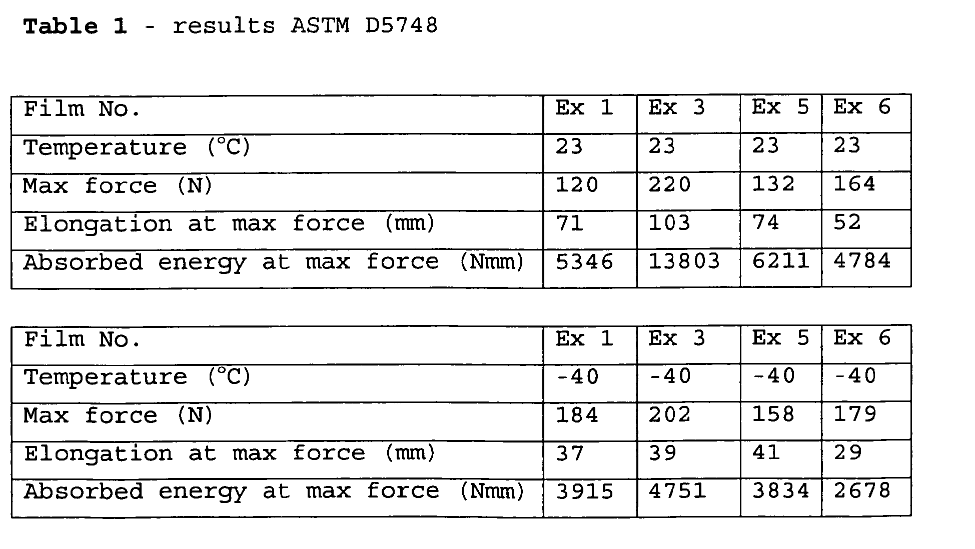

### Example 7

The sealing behaviour of films has been analysed with a Toyoseiko type HG-100 according to the following procedure:
(I) Two films are sealed to each other at a sealing temperature T (°C), sealing pressure of 2 bar and sealing time of 4 seconds.
(II) The sealing temperature T (°C) is varied in steps of 5°C between 120-180°C, the latter representing the maximum temperature of the used apparatus.
(III)The seal integrity is tested by pulling one end from each of the two films apart with a tensile tester.
(IV) At lower temperatures the seal will de-laminate or open due to lack of proper sealing
(V) The seal initiation temperature (T¹) is the lowest temperature when the seal is not de-laminating but the film is elongating and breaking at a random place.
(VI) The maximum sealing temperature is exceeded when one of the films snaps off at the edge of the seal. The recorded maximum seal temperature (T²) is defined as 5°C lower than this snap-off temperature.
(VII)The sealing range is defined as SR=T²-T¹

The films of Examples 1, 2 and 3 all with a total film thickness of 120 *µ*m, were compared and results presented in Table 2.

**Table 2**

| Film No. | Ex 1 | Ex 2 | Ex 3 |
|---|---|---|---|
| Seal initiation temperature(°C)T¹ | 145 | 145 | 140 |
| Max sealing temperature (°C) T² | 150 | 175 | >180 |
| Sealing range T²-T¹ | 5 | 30 | >40 |

### Example 8

The film of Example 3 was used for packaging of lettuce on a commercial packaging machine from SFK of Denmark in order to demonstrate the suitability of the film of the invention.

A first film with 220 µm thickness was heated and deep drawn to form a 20cm deep tray, filled with 1 piece of lettuce and a second film with 70 *µ*m thickness was sealed (155°C) on top making a lid. The seal integrity was afterwards tested by cutting a 25mm strip of film and loaded with 100N in a conventional tensile testing equipment.

### Result

The film could be deep drawn without thin spots or holes, the seal had no leakage and did not delaminate during tensile testing.

### Example 9

The film below was used for packaging of pre-boiled potatoes in water on a commercial packaging machine, Tiromat Powerpack 620, 2001 model, in order to demonstrate the suitability of the film of the invention in the packaging operation and for reheating of the potatoes - still in the package - in boiling water as well as in a microwave oven.
- **Sealing layer:**: PE-LLDPE - Borstar FB2230 (85%) + PE-LLDPE-mLLDPE - Dow Elite 5400 (15%)
- **First layer:**: PP Heterophasic Copolymer - Borealis BHC5012 (85%) + PE-LLDPE-mLLDPE - Dow Elite 5400 (15%)
- **Second sealing Layer:**: PE-LLDPE - Borstar FB2230 (85%) + PE-LLDPE-mLLDPE - Dow Elite 5400 (15%)

A first film with 170 *µ*m thickness was heated and deep drawn to form a 5cm deep tray, filled with 9 pre-boiled potatoes and a second film with 100 *µ*m thickness was sealed (130°C) on top making a lid while being under vacuum. The packs were heated and tested in the following ways:

### A - In water

The pack with potatoes was put into boiling water and kept there for 10 minutes.

The packs showed no deformation or change in its shape. The packs maintained the vacuum.

The packs could not be torn open by hand.

The potatoes were entirely warm and had a fully acceptable taste and texture.

This procedure was repeated for 10 packages with same result.

### B - In microwave oven

The pack with potatoes was heated in a conventional microwave oven at 350watt for 10 minutes.

The packs showed no deformation or change in its shape. The packs maintained the vacuum.

The packs could not be torn open by hand.

The potatoes were entirely warm and had a fully acceptable taste and texture.

This procedure was repeated for 10 packages with same result.

The film could be deep drawn without thin spots or holes, the seal had no leakage and did not delaminate during tensile testing. Heating in did not damage the packaging.

## Claims

1. The use of a polyolefin film comprising a polypropylene polymer and a polyethylene polymer for the packaging of fresh produce.

2. Use as claimed in claim 1 wherein the fresh produce is fruit, vegetables, meat or seafood.

3. Use as claimed in claim 2 wherein the fresh produce is meat or seafood.

4. Use as claimed in claim 3 for the packaging of fish.

5. Use as claimed in claim 1 to 4 wherein said film is a multilayer film having at least a first layer and a sealing layer, said first layer comprising a polypropylene polymer and said sealing layer comprising a polyethylene polymer.

6. Use as claimed in claim 1 to 5 wherein said polypropylene polymer is a copolymer of propylene with a C₂₋₁₀-alpha olefin.

7. Use as claimed in any one of claims 5 to 6 wherein said sealing layer comprises an LDPE or LLDPE and a polyethylene copolymer with a polar comonomer.

8. Use as claimed in claim 7 wherein said polar comonomer is an acrylate comonomer.

9. Use as claimed in any one of claims 5 to 8 wherein said sealing layer comprises an LLDPE.

10. Use as claimed in claim 9 wherein said sealing layer comprises an mLLDPE and an LLPDE made by Ziegler-Natta catalysis.

11. Use as claimed in any one of claims 6 to 10 wherein said propylene copolymer is a heterophasic ethylene propylene copolymer.

12. Use as claimed in any one of claims 5 to 11 wherein said first layer comprises an LLPDE.

13. Use as claimed in any one of claims 5 to 12 wherein said multilayer film has 3 layers.

14. Use as claimed in claim 13 wherein said three layer film contains two identical sealing layers sandwiching a first layer.

15. A multilayer film having a first layer and a sealing layer, said first layer comprising a heterophasic polypropylene copolymer with a C₂₋₁₀-alpha olefin comonomer and said sealing layer comprising an LLDPE and an ethylene acrylate copolymer.

16. A process for the manufacture of a multilayer film as claimed in claim 15 comprising coextruding a first layer and a sealing layer, said first layer comprising a heterophasic polypropylene copolymer with a with a C₂₋₁₀₋alpha olefin comonomer and said sealing layer comprising an LLDPE and an ethylene acrylate copolymer, and blowing the extrudate into a film.

17. A method for packaging fresh produce comprising packaging said produce using a film comprising a polypropylene polymer and a polyethylene polymer.

18. A process for packaging fresh produce comprising:
(I) Deep drawing a polyolefin film comprising a polypropylene polymer and a polyethylene polymer as defined in any one of claims 1 to 14 to form a container;
(II) placing said fresh produce in said container; and
(III) heat sealing the container with a second polyolefin film comprising a polypropylene polymer and a polyethylene polymer as defined in any one of claims 1 to 15.

19. A process for packaging fresh produce comprising forming an open package using a film comprising a polypropylene polymer and a polyethylene polymer as defined in any one of claims 1 to 15, filling said package with said fresh produce, and heat-sealing the package.
